# EUROPÄISCHE PATENTANMELDUNG

(11) **EP 4 397 948 A1**
(43) Veröffentlichungstag der Anmeldung: **10.07.2024**
(21) Anmeldenummer: 23215011.0
(22) Anmeldetag: 07.12.2023
(51) Int. Cl.: G01D 4/00, H02J 3/14, H02J 13/00

(54) **SMART METER UND MESSINFRASTRUKTUR**

(30) Priorität: 03.01.2023 DE 102023100097
(71) Anmelder: E.ON SE, 45131 Essen (DE)
(72) Erfinder: GAIQUI, Zachary, Birmingham, B74 2TX (GB); RUMNEY, Denver, Galashiels, TD1 2BL (GB)
(74) Vertreter: Gunzelmann, Rainer

(57) **Zusammenfassung**

Es wird Smart Meter für ein Gebäude offenbart, welches umfasst: ein Smart Meter Gateway, das dazu eingerichtet ist, mit Energieerzeugern, Energiespeichern und/oder Energieverbrauchern in dem Gebäude zu kommunizieren, einen ersten digitalen Stromzähler, der dazu eingerichtet ist, in dem Gebäude verbrauchte Energie zu messen und mit dem Smart Meter Gateway zu kommunizieren, eine Kommunikationsvorrichtung, die dazu eingerichtet ist, mit einer Steuerungsvorrichtung in einer Zentraleinheit zu kommunizieren und eine Heimsteuervorrichtung, die dazu eingerichtet ist, über die Kommunikationsvorrichtung mit der Steuerungsvorrichtung zu kommunizieren und über das Smart Meter Gateway die Energieerzeuger, Energiespeicher und/oder Energieverbraucher zu steuern. Ferner wird eine Messinfrastruktur mit einem Smart Meter offenbart.

## Beschreibung

### TECHNISCHES GEBIET

Die vorliegende Offenbarung betrifft das technische Gebiet der Smart Meter zur Messung von elektrischer Arbeit, wobei das Smart Meter Zusatzfunktionen bereitstellt. Insbesondere betrifft die vorliegende Offenbarung ein Smart Meter, welches mit einer Zentraleinheit in Kommunikationsverbindung steht. Des Weiteren betrifft die vorliegende Offenbarung eine Messinfrastruktur umfassend ein Smart Meter.

### HINTERGRUND

Viele Energienetzbetreiber statten nicht nur Neubauten, sondern auch Bestandsbauten mit "modernen Messeinrichtungen", sogenannten "Smart Metern" aus. Bei den modernen Messeinrichtungen handelt es sich um geeichte, digitale Stromzähler, der üblicherweise nur den aktuellen Zählerstand, und manchmal auch die aktuelle Gesamtleistung aller eingeschalteten Elektrogeräte und Verbrauchswerte für verschiedene Zeiträume anzeigen.

Die modernen Messeinrichtungen umfassen oft von Haus aus keine Kommunikationseinheit, können aber mit einem als Kommunikationseinheit ausgebildeten "Smart-Meter-Gateway" zu einem "intelligenten Messsystem" aufgerüstet werden. Die meisten Energienetzbetreiber setzen jedoch aus Kostengründen, insbesondere bei Kunden mit einem Jahresverbrauch von unter 6000 kWh, kein Smart-Meter-Gateway ein, so dass der Einsatz moderner Messeinrichtungen nur einen geringen Mehrwert liefert.

Bekannte Smart-Meter-Gateways sind dazu eingerichtet, über ein Weitverkehrsnetz (Wide Area Network, WAN) mit externen Marktteilnehmern und mit einem Smart-Meter-Gateway-Administrator zu kommunizieren. Ferner kann das Smart-Meter-Gateway über ein Lokales Metrologisches Netz (Local Metrological Network, LMN) mit angebundenen Zählern (Strom, Gas, Wasser, und/oder Wärme) eines oder mehrerer Letztverbraucher kommunizieren, wobei die Zähler ihre Messwerte über das LMN an das Smart-Meter-Gateway kommunizieren. Des Weiteren ist das Smart-Meter-Gateway dazu eingerichtet, über ein Heimnetz (Home Area Network, HAN) mit steuerbaren Energieverbrauchern und Energieerzeugern, wie z. B. intelligenten Haushaltsgeräten, oder Kraft-Wärme-Kopplungs- oder Photovoltaik-Anlagen, zu kommunizieren. Über das HAN stellt das Smart-Meter-Gateway auch Daten für den Letztverbraucher beziehungsweise für einen Service-Techniker im HAN bereit.

Elektrische Versorgungsnetze verfügen über begrenzte freie Kapazitäten. Ein weiterer Kapazitätsbedarf in den elektrischen Versorgungsnetzen wird durch den Ausbau regenerativer Energiequellen (beispielsweise von Photovoltaikanlagen, Windkraftanlagen, etc.), der Elektrifizierung der Wärmeerzeugung (beispielsweise mit Hilfe von Wärmepumpen) und den Ausbau der E-Mobilität hervorgerufen. Um teure und mehrere Jahre in Anspruch nehmende Netzausbauten zu vermeiden, setzen Energienetzbetreiber immer häufiger intelligente Netzmanagementsysteme ein, welche an das elektrische Versorgungsnetz angeschlossene elektrische Lasten, Energieerzeuger und/oder Energiespeicher hinsichtlich der Energieaufnahme aus und der Energieabgabe in das elektrische Versorgungsnetz steuern.

In elektrischen Versorgungsnetzen muss sichergestellt werden, dass es zu keiner Überlastung kommt und die Netzstabilität gewährleistet wird. Um insbesondere Beschädigungen von Transformatoren durch thermische Überlastung zu vermeiden, kommen Maßnahmen zum Vermeiden von Überlasten zum Einsatz. Zur Vermeidung solcher Überlasten gibt es zentrale Netzmanagementsysteme, die an das elektrische Versorgungsnetz angeschlossene elektrische Lasten in Gebäuden (beispielsweise Wärmepumpen) selektiv abschalten. Bekannte Smart Meter sind aber nicht dazu eingerichtet, auf Weisung eines zentralen Netzmanagementsystems an das elektrische Versorgungsnetz angeschlossene elektrische Lasten in Gebäuden abzuschalten bzw. zu steuern.

### KURZER ABRISS

Der vorliegenden Offenbarung liegt die Aufgabe zugrunde, ein verbessertes Smart Meter für ein Gebäude bereitzustellen, welches neben einer eichrechtskonformen Messung von in dem Gebäude verbrauchtem Strom eine Steuerung von an das elektrische Hausnetz in dem Gebäude angeschlossenen Energieverbrauchern, Energieerzeugern und/oder Energiespeichern durch eine externe Zentraleinheit ermöglicht.

Zur Lösung dieser Aufgabe wird ein Smart Meter für ein Gebäude vorgeschlagen, welches ein Smart Meter Gateway, das dazu eingerichtet ist, mit Energieerzeugern, Energiespeichern und/oder Energieverbrauchern in dem Gebäude zu kommunizieren, einen ersten digitalen Stromzähler, der dazu eingerichtet ist, in dem Gebäude verbrauchte Energie zu messen und mit dem Smart Meter Gateway zu kommunizieren, eine Kommunikationsvorrichtung, die dazu eingerichtet ist, mit einer Steuerungsvorrichtung in einer Zentraleinheit zu kommunizieren, und eine Heimsteuervorrichtung, die dazu eingerichtet ist, über die Kommunikationsvorrichtung mit der Steuerungsvorrichtung zu kommunizieren und über das Smart Meter Gateway die Energieerzeuger, Energiespeicher und/oder Energieverbraucher zu steuern, umfasst.

Bei dem Smart Meter Gateway kann es sich insbesondere um eine Kommunikationsvorrichtung handeln, die eine WAN-, LMN- und/oder HAN-Schnittstelle umfasst. Bei den Energieverbrauchern handelt es sich um elektrische Lasten, wie beispielsweise Wärmepumpen oder Ladestationen für Elektrofahrzeuge. Bei den Energieerzeugern kann es sich beispielsweise um eine Photovoltaikanlage handeln. Als Energiespeicher kommen beispielsweise Batterien in Frage. Das Smart Meter Gateway kann ferner dazu eingerichtet sein, Messdaten des ersten digitalen Stromzählers an einen Netzbetreiber zu senden.

Bei dem ersten digitalen Stromzähler kann es sich um einen geeichten, digitalen Stromzähler, wie eine sogenannte "moderne Messeinrichtung, mME" handeln, d.h. einen geeichten elektronischen Stromzähler. Der erste digitale Stromzähler kann vor einem unbemerkten bzw. unberechtigten Zugriff von außen geschützt sein (beispielsweise durch eine Verplombung des Gehäuses des Stromzählers). So kann der digitale Stromzähler innerhalb eines eichrelevanten Teils des Smart Meters angeordnet sein. Der erste digitale Stromzähler kann mit einer Abtrastfrequenz unterhalb des kHz-Bereiches, beispielsweise mit einer Abtrastfrequenz von 1 bis 3 Hz arbeiten. Optional kann der erste digitale Stromzähler eine digitale Anzeige aufweisen, über die ein Nutzer den aktuellen Zählerstand, und nach Eingabe einer PIN, die aktuelle Gesamtleistung aller eingeschalteten Elektrogeräte und detaillierte Verbrauchswerte für verschiedene Zeiträume (z.B. Tag, Woche, Monat und Jahr) einsehen kann.

Bei der Kommunikationsvorrichtung zum Kommunizieren mit der Steuerungsvorrichtung in der Zentraleinheit kann es sich um eine separate Kommunikationsvorrichtung handeln, die über einer Kommunikationsverbindung, beispielsweise eine Powerline Communication-, PLC, Kommunikationsverbindung, eine Narrowband- (NB) PLC-Kommunikationsverbindung, eine Mobilfunk-Kommunikationsverbindung und/oder eine Ethernet- Kommunikationsverbindung, mit der externen Zentraleinheit kommuniziert. Die Kommunikationsvorrichtung kann auch in dem Smart Meter Gateway integriert bzw. Teil des Smart Meter Gateways sein. In diesem Fall kann die Kommunikationsvorrichtung dazu eingerichtet sein, über ein WAN (z.B. via PLC) mit einer Steuerungsvorrichtung in der Zentraleinheit zu kommunizieren.

Bei der Zentraleinheit kann es sich um eine Transformatorstation oder eine Transformatorunterstation in einem elektrischen Versorgungsnetz handeln, in der elektrische Energie von Verteilernetzen im Mittelspannungsbereich (z.B. 3 bis 30 kV) auf die in Haushalten übliche Niederspannung (z.B. 230 V bzw. 400 V) transformiert wird. Die Transformatorstation kann eine Primärtechnik mit einem Leistungstransformator, einer Mittelspannungsschaltanlage und einer Niederspannungsverteilung, eine Sekundärtechnik mit Automatisierungs- und Fernwirktechnik, Energiezähler und eine Kommunikationsvorrichtung umfassen.

Bei der Steuerungsvorrichtung in der Zentraleinheit kann es sich um eine G100-kompatible Unterstationssteuerung handeln, siehe Energy Networks Association, Engineering Recommendation G100, Issue 1 Amendment 2 2018, Technical Requirements for Customer Export Limiting Schemes, die dazu eingerichtet ist, Daten des elektrischen Versorgungsnetz zu erfassen, diese zu verarbeiten und Steuerungsbefehle für die Heimsteuervorrichtung, insbesondere Steuerungsbefehle für die an das elektrische Hausnetz in dem Gebäude angeschlossenen Energieverbraucher, Energieerzeuger und/oder Energiespeicher, zu erzeugen. Zur Erzeugung der Steuerungsbefehle kann die Steuerungsvorrichtung ferner dazu eingerichtet sein, Messdaten des Gebäudes bzw. Daten der in dem Gebäude angeschlossenen Energieverbraucher, Energieerzeuger und/oder Energiespeicher über das Smart Meter Gateway zu erhalten.

Bei dem elektrischen Versorgungsnetz kann es sich um ein Niederspannungsnetz handeln, insbesondere ein Niederspannungsnetz, welches von einem Mittelspannungsnetz gespeist wird. Das elektrische Versorgungsnetz kann ferner als ein intelligentes Stromnetz, ein sogenanntes "Smart Grid", ausgebildet sein. Bei dem Haus kann es sich um jede Art von Gebäude, wie beispielsweise ein Ein- oder Mehrfamilienhaus handeln, dessen elektrisches Hausnetz mit dem elektrischen Versorgungsnetz verbunden ist.

Bei der Heimsteuervorrichtung kann es sich um eine G100-kompatible Steuerung handeln, die dazu eingerichtet ist, Steuerungsbefehle von der Steuerungsvorrichtung in der Zentraleinheit zu empfangen, und darauf basierend an das elektrische Hausnetz in dem Gebäude angeschlossene Energieverbraucher, Energieerzeuger und/oder Energiespeicher zu steuern.

Folglich wird ein intelligentes Smart Meter vorgeschlagen, welches sowohl den Verbrauch elektrischer Energie in einem Gebäude misst, zugleich aber auch eine Steuerung von an das elektrische Hausnetz in dem Gebäude angeschlossenen Energieverbrauchern, Energieerzeugern und/oder Energiespeichern ermöglicht. Insbesondere ist es möglich, beide Funktionalitäten in einer Einheit, beispielsweise in einem Gehäuse oder einem Schaltschrank, zu integrieren.

Um unmittelbar auf Steuerungsbefehle von der Steuerungsvorrichtung in der Zentraleinheit reagieren zu können kann die Heimsteuervorrichtung in Bezug auf den ersten digitalen Stromzähler einen priorisierten Zugriff auf das Smart Meter Gateway haben. Insbesondere kann die Heimsteuervorrichtung in Bezug auf alle auf das Smart Meter Gateway zugreifenden Einheiten einen Kommunikationsvorrang haben. Wollen beispielsweise der erste digitale Stromzähler und die Heimsteuervorrichtung gleichzeitig Daten über das Smart Meter Gateway senden, so werden zuerst die Daten der Heimsteuervorrichtung gesendet. Entsprechend kann ein Datenempfang die Heimsteuervorrichtung priorisieren. Dazu kann in dem Smart Meter eine Prioritätssteuerung vorgesehen sein, welche den Zugriff auf das Smart Meter Gateway steuert. Ferner kann ein Datenspeicher zum Zwischenspeichern von Daten vorgesehen sein. So kann die Heimsteuervorrichtung in Bezug auf den ersten digitalen Stromzähler Vorrang haben, um die Energieverbraucher, Energieerzeuger und/oder Energiespeicher zu steuern.

Ist die Kommunikationsvorrichtung in dem Smart Meter Gateway integriert, so kann die Heimsteuervorrichtung in Bezug auf den ersten digitalen Stromzähler Vorrang haben, um Steuerungsbefehle für die Energieverbraucher, Energieerzeuger und/oder Energiespeicher von der Steuerungsvorrichtung in der Zentraleinheit zu empfangen. Insbesondere kann das Smart Meter eine Prioritätssteuerung umfassen, die dazu eingerichtet ist, ein Senden und/oder Empfangen durch das Smart Meter Gateway zu steuern.

Das Smart Meter kann ferner einen Lastmanager umfassen, der in Kommunikationsverbindung mit dem Smart Meter Gateway steht. Der Lastmanager kann zusätzlich mit dem ersten digitalen Stromzähler in Kommunikationsverbindung stehen. Der Lastmanager kann von einem Endkunden und/oder einem Netzbetreiber gesteuert werden und dazu eingerichtet sein, Energieverbraucher, Energieerzeuger und/oder Energiespeicher, die mit dem Hausnetz des Gebäudes elektrisch verbunden sind, zu steuern. Gemäß dieser Ausführungsform hat die Heimsteuervorrichtung in Bezug auf den Lastmanager einen priorisierten Kommunikationszugriff auf die Energieverbraucher, Energieerzeuger und/oder Energiespeicher. Insbesondere hat die Heimsteuervorrichtung in Bezug auf den Lastmanager einen priorisierten Steuerungszugriff auf die Energieverbraucher, Energieerzeuger und/oder Energiespeicher. Beispielsweise kann ein Endkunde über ein App auf seinem Smartphone den Lastmanager über das Smart Meter Gateway anweisen, die Einspeisung von von einer Photovoltaikanlage erzeugter elektrischer Energie in das elektrische Versorgungsnetz zu stoppen. Will dementgegen die Heimsteuervorrichtung auf Anweisung der Steuerungsvorrichtung in der Zentraleinheit, dass die Photovoltaikanlage die erzeugte elektrische Energie in das elektrische Versorgungsnetz einspeist, so haben die Steuerungsbefehle der Heimsteuervorrichtung gegenüber den Steuerungsbefehlen des Lastmanagers Vorrang, so dass die von der Photovoltaikanlage erzeugte elektrische Energie in das elektrische Versorgungsnetz einspeist wird.

Die Heimsteuervorrichtung kann ferner dazu eingerichtet sein, gleichzeitig über die Kommunikationsvorrichtung mit der Steuerungsvorrichtung zu kommunizieren und über das Smart Meter Gateway die Energieverbraucher, Energieerzeuger und/oder Energiespeicher zu steuern. Ist die Kommunikationsvorrichtung in dem Smart Meter Gateway integriert, so ist auch eine Kommunikation mit der Steuerungsvorrichtung in der Zentraleinheit sowie eine parallele Steuerung der Energieverbraucher, Energieerzeuger und/oder Energiespeicher in dem Gebäude möglich.

Um Vorteile hinsichtlich der Steuerungsfunktionalitäten realisieren zu können kann die Heimsteuervorrichtung in einer Firmware des digitalen Stromzählers integriert sein. Gemäß einer Ausführungsform kann der Lastmanager auch in der Heimsteuervorrichtung integriert sein. Dabei können beide Einheiten in einer Firmware, insbesondere einer Firmware in dem ersten digitalen Stromzähler, integriert sein. Die Integration mehrerer Funktionalitäten in einer einzigen Smart-Meter-Firmware ermöglicht es, auf einfache Weise eine Logik für die Priorisierung von Steuerungsfunktionen, d.h., eine Prioritätssteuerungsvorrichtung, vorzusehen, wenn mehrere gleichzeitige Steuersignale für die Energieverbraucher, Energieerzeuger und/oder Energiespeicher vorliegen.

Ferner können die Heimsteuervorrichtung und die Prioritätssteuerung in einer Firmware des ersten digitalen Stromzählers integriert sein.

Gemäß einer Ausführungsform hat die Heimsteuervorrichtung Zugriff auf Messdaten des digitalen Stromzählers hat. So kann die Heimsteuervorrichtung die Messdaten des digitalen Stromzählers an die Steuerungsvorrichtung in der Zentraleinheit weiterleiten, welche diese Daten verarbeitet und darauf basierend Steuerungsbefehle für die Energieverbraucher, Energieerzeuger und/oder Energiespeicher erzeugt, und diese an die Heimsteuervorrichtung sendet. Die Integration mehrerer Funktionen in einer einzigen Vorrichtung macht die Zählerdaten für alle Funktionen verfügbar. Ferner wird nur eine Schnittstelle zwischen dem ersten digitalen Stromzähler und den weiteren Komponenten des Smart Meters benötigt, was zu einer vereinfachten Systemintegration führt. Des Weiteren kann jede Funktion mit Hilfe eines Kommunikationskanals implementiert werden, was hinsichtlich Leistungs- und IT-Sicherheitsaspekten zu mehr Flexibilität im Betrieb des Smart Meters führt.

Das Smart Meter kann ferner einen zweiten digitalen Stromzähler umfassen, der dazu eingerichtet ist, einen Eigenenergieverbrauch von in dem Gebäude erzeugter Energie, beispielsweise von einer Photovoltaikanlage als Energieerzeuger erzeugter Energie, zu messen.

Das Smart Meter kann geeicht und/oder gemäß der Measuring Instruments Directive, MID, zertifiziert sein. Das Smart Meter kann ferner eine erste Speicherungsvorrichtung umfassen, die dazu eingerichtet ist, die Messwerte zu speichern. Beispielsweise kann es sich bei der Speicherungsvorrichtung um ein Random Access Memory, RAM, und/oder einen Flash-Speicher handeln.

Die vorliegende Offenbarung betrifft ferner eine Messinfrastruktur, die ein vorstehend beschriebenes Smart Meter und eine Zentraleinheit mit einer Steuerungsvorrichtung in Kommunikationsverbindung mit dem Smart Meter Gateway des Smart Meters umfasst.

Die Steuerungsvorrichtung der Zentraleinheit kann dazu eingerichtet sein, Steuerungssignale zum Steuern der Energieverbraucher, Energieerzeuger und/oder Energiespeicher zu erzeugen und diese an die Heimsteuervorrichtung zu senden. Dazu kann die Steuerungsvorrichtung dazu eingerichtet sein, Messdaten von dem Smart Meter, beispielsweise von einem oder beiden der digitalen Stromzähler, zu empfangen, diese Messdaten zu verarbeiten und darauf basierende die Steuerungssignale zu erzeugen.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen und Vorrichtungen und Systeme ergeben sich aus der nachfolgenden Beschreibung von Ausführungsbeispielen und den Figuren.
- Fig. 1: zeigt eine schematische Darstellung eines Ausführungsbeispiels eines elektrischen Versorgungsnetzes mit einer Zentraleinheit und einer Vielzahl von Häusern; und
- Fig. 2: zeigt eine schematische Darstellung eines Smart Meters.

### DETAILLIERTE BESCHREIBUNG

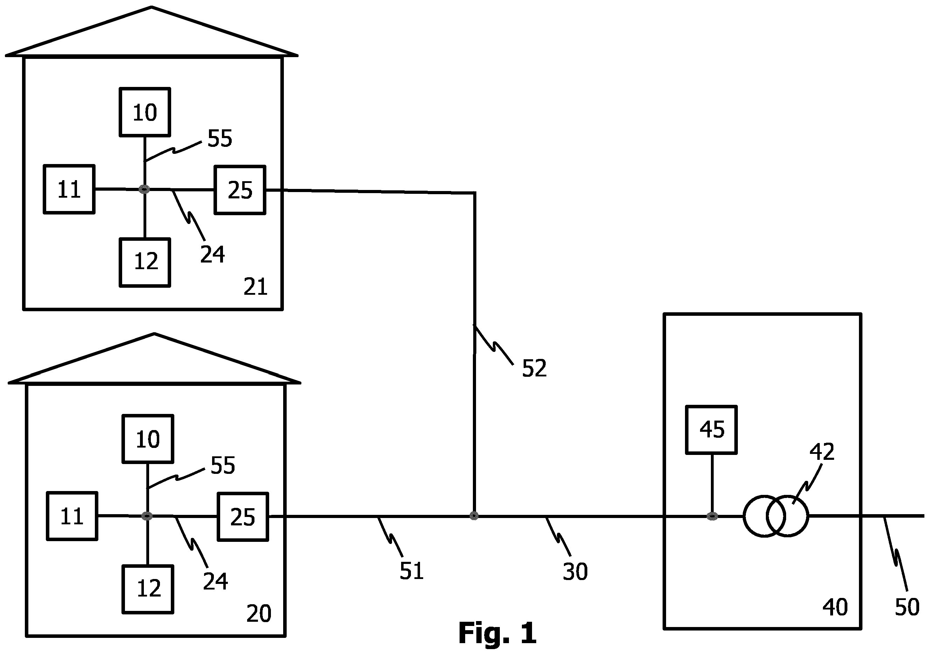

Die Fig. 1 zeigt eine schematische Darstellung eines Ausführungsbeispiels eines elektrischen Versorgungsnetzes 30 mit einer Zentraleinheit 40 und einer Vielzahl von Häusern, von denen zwei Häuser 20 und 21 exemplarisch gezeigt sind.

Bei dem elektrische Versorgungsnetz 30 handelt es sich um ein Niederspannungsnetz, das von einem Mittelspannetz 50 gespeist wird. Zur Transformation zwischen den Netzen 50 und 30 ist in der Zentraleinheit 40 ein Transformator 42 vorgesehen. Durch den Transformator 42 wird die Mittelspannung des Mittelspannungsnetzes 50 in eine Niederspannung transformiert, die von einem Verteiler in eine Vielzahl von Verteilungssträngen des elektrischen Versorgungsnetzes 30 verteilt wird (in Fig. 1 nicht gezeigt). Beispielsweise können an den Verteiler über 100 Verteilungsstränge angeschlossen sein.

Die Zentraleinheit 40 umfasst eine Steuerungsvorrichtung 45. Mit Hilfe der Steuerungsvorrichtung 45 kann die Zentraleinheit 40 elektrische Lasten und Energieerzeuger in den Häusern 20 und 21 ab- bzw. anschalten. Bei der Steuerungsvorrichtung 45 handelt es sich um eine G100-kompatible Unterstationssteuerung. Weitere, in der Fig. 1 nicht gezeigte Elemente, wie beispielsweise eine Leistungsmessvorrichtung, eine Kommunikationsvorrichtung, usw., können in der Zentraleinheit 40 vorgesehen sein.

Jedes der Häuser 20 und 21 umfasst eine Smart Meter 25 und ein Hausnetz 24, an das eine Photovoltaikanlage 10, ein elektrischer Energiespeicher 11 und eine Ladestation für ein Elektrofahrzeug 12 angeschlossen sind. Weitere, in der Fig. 1 nicht gezeigte, elektrische Lasten und elektrische Energieerzeuger können in jedem der Häuser 20 und 21 an das Hausnetz 24 angeschlossen sein. Über das elektrische Versorgungsnetz 30 ist die Steuerungsvorrichtung 45 mit den Smart Metern 25 bzw. den Hausnetzen 24 der Häuser 20 und 21 verbunden. Des Weiteren besteht eine PLC-Kommunikationsverbindung 51 zwischen der Steuerungsvorrichtung 45 und dem Smart Meter 25 in dem Haus 20 und eine PLC-Kommunikationsverbindung 52 zwischen der Steuerungsvorrichtung 45 und dem Smart Meter 25 in dem Haus 21. Jeweilige PLC-Kommunikationsverbindungen 55 zwischen dem Smart Meter 25 und der Photovoltaikanlage 10 sind in jedem der Häuser 20 und 21 vorgesehen. Für die Kommunikationsverbindungen 51, 52 und 55 notwendige PLC-Modems und Koppelkapazitäten sind ferner in der Zentraleinheit 40 und den Häusern 20 und 21 vorgesehen (in Fig. 1 nicht gezeigt).

Zur Vermeidung von Über- bzw. Unterlastsituationen in dem elektrischen Versorgungsnetz 30 steuert die Steuerungsvorrichtung 45 in jedem der Häuser 20 und 21 die Photovoltaikanlage 10, den elektrischen Energiespeicher 11 und die Ladestation für das Elektrofahrzeug 12. Dazu schickt die Steuerungsvorrichtung 45 über die Kommunikationsverbindung 51 Steuerungsbefehle an das Smart Meter 25 in dem Haus 20 und über die Kommunikationsverbindung 52 Steuerungsbefehle an das Smart Meter 25 in dem Haus 21. In Abhängigkeit von den empfangenen Steuerungsbefehlen steuert das Smart Meter 25 in dem Haus 20 die Photovoltaikanlage 10, den elektrischen Energiespeicher 11 und die Ladestation für das Elektrofahrzeug 12. In Abhängigkeit von den empfangenen Steuerungsbefehlen steuert auch das Smart Meter 25 in dem Haus 21 die Photovoltaikanlage 10, den elektrischen Energiespeicher 11 und die Ladestation für das Elektrofahrzeug 12.

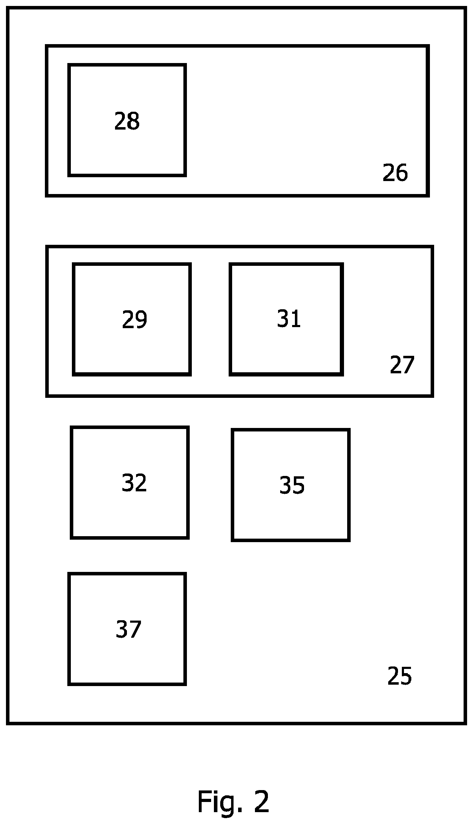

Die Fig. 2 zeigt eine schematische Darstellung eines Smart Meters. Insbesondere handelt es sich bei dem Smart Meter um eines der in der Fig. 1 gezeigten Smart Meter 25, beispielsweise das in dem Haus 20 an das Hausnetz 24 angeschlossene Smart Meter 25.

Das Smart Meter 25 umfasst ein Smart Meter Gateway 26, das dazu eingerichtet ist, mit dem Energieerzeuger 10, dem Energiespeicher 11 und dem Energieverbrauchern 12 in dem Haus 20 zu kommunizieren, einen ersten digitalen Stromzähler 27, der dazu eingerichtet ist, in dem Haus 20 verbrauchte Energie zu messen und mit dem Smart Meter Gateway 26 zu kommunizieren, eine in dem Smart Meter Gateway 26 integrierte Kommunikationsvorrichtung 28, die dazu eingerichtet ist, mit der Steuerungsvorrichtung 45 in der Zentraleinheit 40 zu kommunizieren, und eine Heimsteuervorrichtung 29, die dazu eingerichtet ist, über die Kommunikationsvorrichtung 28 mit der Steuerungsvorrichtung 45 in der Zentraleinheit 40 zu kommunizieren und über das Smart Meter Gateway 26 die Energieerzeuger 10, Energiespeicher 11 und Energieverbraucher 12 in dem Haus 20 zu steuern.

Die Heimsteuervorrichtung 29 hat in Bezug auf den ersten digitalen Stromzähler 27 einen priorisierten Zugriff auf das Smart Meter Gateway 26. Wenn beispielsweise die Heimsteuervorrichtung 29 und der erste digitale Stromzähler 27 gleichzeitig Daten über das Smart Meter Gateway senden wollen, so hat die Heimsteuervorrichtung 29 Priorität, d.h. die Daten bzw. Steuerungsbefehle der Heimsteuerverrichtung 29 werden zuerst von dem Smart Meter Gateway 26 verarbeitet und entsprechend von dem Smart Meter Gateway 26 weitergeleitet. Für diese priorisierte Steuerung ist in dem Smart Meter 25 eine Prioritätssteuerung 31 vorgesehen, die den Zugriff auf das Smartmeter Gateway 26 steuert. Bei der Prioritätssteuerung 31 kann es sich beispielsweise um eine digitale Prozessoreinheit handeln. Insbesondere können die Prioritätssteuerung 31 und die Heimsteuervorrichtung 29 eine gemeinsame Recheneinheit (einen Mikroprozessor) umfassen und/oder in einer gemeinsamen Firmware (in Fig. 2 nicht gezeigt) integriert sein. Entsprechend hat die Heimsteuervorrichtung 29 in Bezug auf den ersten digitalen Stromzähler 27 Vorrang, um die Energieerzeuger 10, Energiespeicher 11 und Energieverbraucher 12 in dem Haus 20 zu steuern.

Die Heimsteuervorrichtung 29 ist dazu eingerichtet, gleichzeitig über die Kommunikationsvorrichtung 28 bzw. das Smart Meter Gateway 26 mit der Steuerungsvorrichtung 45 in der Zentraleinheit 40 zu kommunizieren und über das Smart Meter Gateway 26 die Energieerzeuger 10, Energiespeicher 11 und Energieverbraucher 12 in dem Haus 20 zu steuern.

Zur vereinfachten Realisierung von Steuerungsfunktionalitäten ist die Heimsteuervorrichtung 29 in einer Firmware des ersten digitalen Stromzählers 27 integriert. Die Integration mehrerer Funktionalitäten in einer einzigen Smart-Meter-Firmware ermöglicht es, auf einfache Weise eine Logik für die Priorisierung von Steuerungsfunktionen, d.h., die Priorisierungssteuerung 31, vorzusehen, die priorisiert, wenn mehrere gleichzeitige Steuersignale für die Energieerzeuger 10, Energiespeicher 11 und Energieverbraucher 12 in dem Haus 20 vorliegen.

In der in der Fig. 2 gezeigten Ausführungsform umfasst das Smart Meter 25 ferner einen optionalen Lastmanager 32, der in Kommunikationsverbindung mit dem Smart Meter Gateway 26 steht. Der Lastmanager 32 steht über das Smart Meter Gateway 26 mit einem Endkunden (in den Figuren nicht gezeigt) in Verbindung und ist dazu eingerichtet, den Energieerzeuger 10, der mit dem Hausnetz 24 in dem Haus 20 elektrisch verbunden ist, zu steuern. Beispielsweise kann ein Endkunde mithilfe einer auf seinem Smartphone installierten App über das Smart Meter Gateway 26 mit dem Lastmanager 32 kommunizieren und den Lastmanager 32 anweisen, den Energieerzeuger 10 zu aktivieren bzw. zu deaktivieren, beispielsweise eine Photovoltaikanlage derart zu deaktivieren, dass sie temporär keinen Strom in das Versorgungsnetz 30 einspeist.

Die Heimsteuervorrichtung 29 hat in Bezug auf den Lastmanager 32 einen priorisierten Kommunikationszugriff auf die die Energieerzeuger 10, Energiespeicher 11 und Energieverbraucher 12 in dem Haus 20. Insbesondere hat die Heimsteuervorrichtung 29 in Bezug auf den Lastmanager 32 einen priorisierten Steuerungszugriff auf die Energieerzeuger 10, Energiespeicher 11 und Energieverbraucher 12 in dem Haus 20. Weist ein Endkunde beispielsweise den Lastmanager 32 an, die Einspeisung von von der Photovoltaikanlage 10 erzeugter elektrischer Energie in das elektrische Versorgungsnetz 30 zu beenden, will dementgegen die Heimsteuervorrichtung 29 auf Anweisung der Steuerungsvorrichtung 45 in der Zentraleinheit 10, dass die Photovoltaikanlage 10 die erzeugte elektrische Energie in das elektrische Versorgungsnetz 30 einspeist, so haben die Steuerungsbefehle der Heimsteuervorrichtung 29 gegenüber den Steuerungsbefehlen des Lastmanagers 32 Vorrang, so dass die von der Photovoltaikanlage 10 erzeugte elektrische Energie in das elektrische Versorgungsnetz 30 einspeist wird. Die priorisierte Steuerung hinsichtlich der Heimsteuerverrichtung 29 und des Lastmanagers 32 erfolgt wiederum durch die Prioritätssteuerung 31.

Gemäß einer Weiterbildung dieser Ausführungsform kann der Lastmanager 32 ebenfalls in dem ersten digitalen Stromzähler 27 integriert sein. So kann der Lastmanager 32 auch in der gemeinsamen Firmware mit der Heimsteuervorrichtung 29 integriert sein.

Die Heimsteuervorrichtung 29 hat ferner Zugriff auf Messdaten des ersten digitalen Stromzählers 27. Die Heimsteuervorrichtung 29 kann die Messdaten des ersten digitalen Stromzählers 27 an die Steuerungsvorrichtung 45 in der Zentraleinheit 40 weiterleiten, welche diese Daten verarbeitet und darauf basierend Steuerungsbefehle für die Energieerzeuger 10, Energiespeicher 11 und Energieverbraucher 12 in dem Haus 20 erzeugt, und diese an die Heimsteuervorrichtung 29 sendet. Die Integration mehrerer Funktionen in ein einziges Gerät macht die Zählerdaten für alle Einheiten des Smart Meters 25 verfügbar. Ferner wird nur eine Schnittstelle zwischen dem ersten digitalen Stromzähler 27 und den weiteren Komponenten des Smart Meters 25 benötigt, was zu einer vereinfachten Systemintegration führt. Des Weiteren kann jede Funktion mit Hilfe eines Kommunikationskanals implementiert werden, was hinsichtlich Leistungs- und IT-Sicherheitsaspekten zu mehr Flexibilität im Betrieb des Smart Meters 25 führt.

Das Smart Meter 25 umfasst ferner einen zweiten digitalen Stromzähler 35, der dazu eingerichtet ist, die in dem Haus 20 durch die Photovoltaikanlage 10 erzeugte Energie zu messen. Das Smart Meter umfasst des Weiteren eine Speicherungsvorrichtung 37, die dazu eingerichtet ist, die Messwerte der digitalen Stromzähler 27 und 35 zu speichern. Beispielsweise kann es sich bei der Speicherungsvorrichtung 37 um ein Random Access Memory, RAM, und/oder einen Flash-Speicher handeln. Die Speicherungsvorrichtung 37 kann ferner dazu eingerichtet sein, unter Steuerung der Prioritätssteuerung 31 Steuerungsbefehle und zu sendende Daten zu speichern.

Die vorliegende Offenbarung betrifft ferner eine Messinfrastruktur, die ein vorstehend beschriebenes Smart Meter 25 und eine Zentraleinheit 40 mit einer Steuerungsvorrichtung 45 in Kommunikationsverbindung mit dem Smart Meter Gateway 26 des Smart Meters 25 umfasst. Die Steuerungsvorrichtung 45 der Zentraleinheit 40 ist dazu eingerichtet, Steuerungssignale zum Steuern der Energieerzeuger 10, Energiespeicher 11 und Energieverbraucher 12 in dem Haus 20 zu erzeigen und über die PLC-Verbindung 51 an die Heimsteuervorrichtung 29 in dem Haus 20 zu senden.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Smart Meter (25) für ein Gebäude (20, 21), umfassend
ein Smart Meter Gateway (26), das dazu eingerichtet ist, mit Energieerzeugern (10), Energiespeichern (11) und/oder Energieverbrauchern (12) in dem Gebäude (20, 21) zu kommunizieren;
einen ersten digitalen Stromzähler (27), der dazu eingerichtet ist, in dem Gebäude (20, 21) verbrauchte Energie zu messen und mit dem Smart Meter Gateway (26) zu kommunizieren;
eine Kommunikationsvorrichtung (28), die dazu eingerichtet ist, mit einer Steuerungsvorrichtung (45) in einer Zentraleinheit (40) zu kommunizieren; und
eine Heimsteuervorrichtung (29), die dazu eingerichtet ist, über die Kommunikationsvorrichtung (28) mit der Steuerungsvorrichtung (45) zu kommunizieren und über das Smart Meter Gateway (26) die Energieerzeuger (10), Energiespeicher (11) und/oder Energieverbraucher (12) zu steuern.

2. Smart Meter (25) nach Anspruch 1, wobei die Kommunikationsvorrichtung (28) in dem Smart Meter Gateway (26) integriert ist.

3. Smart Meter (25) nach einem der vorhergehenden Ansprüche, wobei die Heimsteuervorrichtung (29) in Bezug auf den ersten digitalen Stromzähler (27) einen priorisierten Zugriff auf das Smart Meter Gateway (26) hat.

4. Smart Meter (25) nach einem der vorhergehenden Ansprüche, ferner umfassend
einen Lastmanager (32) in Kommunikationsverbindung mit dem Smart Meter Gateway (26), wobei die Heimsteuervorrichtung (29) in Bezug auf den Lastmanager (32) einen priorisierten Kommunikationszugriff auf die Energieerzeuger (10), Energiespeicher (11) und/oder Energieverbraucher (12) hat.

5. Smart Meter (25) nach einem der vorhergehenden Ansprüche, wobei die Heimsteuervorrichtung (29) dazu eingerichtet ist, gleichzeitig über die Kommunikationsvorrichtung (28) mit der Steuerungsvorrichtung (45) in der Zentraleinheit (40) zu kommunizieren und über das Smart Meter Gateway (26) die Energieerzeuger (10), Energiespeicher (11) und/oder Energieverbraucher (12) zu steuern.

6. Smart Meter (25) nach einem der vorhergehenden Ansprüche, wobei die Heimsteuervorrichtung (29) in einer Firmware des ersten digitalen Stromzählers (27) integriert ist.

7. Smart Meter (25) nach einem der vorhergehenden Ansprüche, ferner umfassend eine Prioritätssteuerung (31), die dazu eingerichtet ist, ein Senden und/oder Empfangen durch das Smart Meter Gateway (26) zu steuern.

8. Smart Meter (25) nach Anspruch 7, wobei die Heimsteuervorrichtung (29) und die Prioritätssteuerung (31) in einer Firmware des ersten digitalen Stromzählers (27) integriert sind.

9. Smart Meter (25) nach einem der vorhergehenden Ansprüche, wobei die Heimsteuervorrichtung (29) Zugriff auf Messdaten des ersten digitalen Stromzählers (27) hat.

10. Smart Meter (25) nach einem der vorhergehenden Ansprüche, ferner umfassend
einen zweiten digitalen Stromzähler (37), der dazu eingerichtet ist, einen Eigenenergieverbrauch von in dem Gebäude (20, 21) erzeugter Energie zu messen.

11. Messinfrastruktur umfassend
ein Smart Meter (25) nach einem der vorhergehenden Ansprüche; und
eine Zentraleinheit (40) in Kommunikationsverbindung mit dem Smart Meter Gateway (26) des Smart Meters (25).

12. Messinfrastruktur nach Anspruch 11, wobei
die Zentraleinheit (40) dazu eingerichtet ist, Steuerungssignale zum Steuern der Energieerzeuger (10), Energiespeicher (11) und/oder Energieverbraucher (12) an die Heimsteuervorrichtung (29) zu senden.
